# EUROPÄISCHE PATENTSCHRIFT

(11) **EP 2 468 166 B1**
(45) Veröffentlichungstag und Bekanntmachung des Hinweises auf die Patenterteilung: **08.01.2014**
(21) Anmeldenummer: 11189285.7
(22) Anmeldetag: 16.11.2011
(51) Int. Cl.: A47L 9/00, A47L 9/28, H01M 2/10, H01M 10/50

(54) **Staubsauger mit temperiertem Akkumulator**
Vacuum cleaner with tempered accumulator
Aspirateur doté d'un accumulateur tempéré

(30) Priorität: 23.12.2010 DE 102010064026
(43) Veröffentlichungstag der Anmeldung: 27.06.2012
(73) Patentinhaber: HILTI Aktiengesellschaft, 9494 Schaan (LI)
(72) Erfinder: Huber, Franz, 86865 Markt Wald (DE); Ziegler, Bernd, 86899 Landsberg am Lech (DE)

(56) Entgegenhaltungen:
- WO-A1-00/36969
- WO-A2-2004/041050
- US-A1- 2003 134 189
- US-A1- 2003 182 758

## Beschreibung

Die Erfindung betrifft einen Staubsauger mit einem Gehäuse und zumindest einem darin angeordneten Akkumulator und/oder zumindest einem Akkuschacht, welcher für die Aufnahme zumindest eines Akkumulators vorbereitet ist.

Durch die stetig zunehmende Leistung von mobilen, elektrisch betriebenen Geräten steigen auch die Anforderungen an die verwendeten Akkumulatoren, die umgangssprachlich auch als Batterien bezeichnet werden. Die zum Teil vergleichsweise hohen Ströme beim Entladen und beim Laden der Akkumulatoren führen zu einer beträchtlichen Erwärmung derselben. Nach dem Stand der Technik werden Akkumulatoren daher häufig im Betrieb gekühlt.

Beispielsweise offenbart die EP 1 178 557 B1 ein schnurloses Elektrowerkzeug mit einem Gehäuse, einem abnehmbaren Akkumulator und einem Akkuladegerät zum Laden des Akkumulators. Der Akkumulator umfasst ein Akkugehäuse mit einer oder mehreren Zellen und einem Belüftungssystem, welches eine Luftströmung um die Zellen ermöglicht. Das Akkuladegerät weist einen Lüfter auf, welche die genannte Luftströmung erzeugt. Schliesslich umfasst das Elektrowerkzeug eine Wärmepumpe zum Kühlen oder Wärmen der Akkuzellen.

Weiterhin ist aus der EP 1 381 134 A1 eine Akku-Ladestation für einen mit dieser elektrisch und baulich verbindbaren wiederaufladbaren Akkumulator bekannt. Diese umfasst eine elektrische und bauliche Kontaktschnittstelle für den Akkumulator und eine Ladeelektronik in einem Ladegehäuse. Im Ladegehäuse ist ein Luftgebläse zur Erzeugung eines Luftstromes durch zwei Lüftungsöffnungen angeordnet, wobei eine Lüftungsöffnung der Kontaktschnittstelle dem Akkumulator räumlich zugeordnet ist und die Ladeelektronik wärmeabführend im Luftstrom angeordnet ist. Beim Kühlverfahren wird in einem ersten Verfahrensschritt ein Luftvolumen mit einer Kühltemperatur an dem Akkumulator vorbei bewegt und in einem zweiten Verfahrensschritt wird das Ladegehäuse mit der Ladeelektronik von dem Luftvolumen mit einer Zwischentemperatur durchsetzt.

Aus der EP 1 419 723 81 ist ein Staubsauger bekannt, welcher mehrere Akkuschalen für Akkumulatoren aufweist, die sowohl in dem genannten Staubsauger, als auch in anderen Elektro-Handgeraten verwendet werden können. Der Staubsauger kann sowohl am Stromnetz betrieben werden als auch autark von den Akkumulatoren versorgt werden.

Weiterhin ist in der US 2003/0182758 ein Akku-betriebener Staubsauger, welcher einen wärmeerzeugenden Akku-Pack enthält und welcher In der Lage ist, den Akku-Pack zu kühlen offenbart. Hierbei enthält der Staubsauger neben dem Akku-Pack einen Behälter für den Akku-Pack, einen Antrieb, eine Ansaugvorrichtung, einen Staubbehälter und ein Gehäuse. In dem Gehäuse ist der Behälter für den Akku-Pack, der Antrieb, die Ansaugvorrichtung und der Staubbehälter enthalten. Des Weiteren enthält das Gehäuse eine Ansaugöffnung, durch die Luft angesaugt wird, einen ersten Luftkanal, durch den die angesaugte Luft in den Staubbehälter und zur Ansaugvorrichtung gesogen wird, sowie einen zweiten Luftkanal, durch den die Luft zur Kühlung des Akku-Packs geführt wird. Der zweite Luftkanal ist über eine Verbindungsstelle, welche sich stromaufwärts zur Ansaugvorrichtung befindet, mit dem ersten Luftkanal verbunden.

Außerdem ist in der WO 2004/041050 ein Staubsauger mit einer Ansaugöffnung für Schmutzluft, einer Ausstoßöffnung der gereinigten Luft, einem Verbindungskanal, der sich von der Ansaugöffnung zur Ausstoßöffnung erstreckt, einer Motor-Filter-Einrichtung und einer Anzahl an Akkus zum Betreiben der Motor-Filter-Einrichtung gezeigt. Die Akkus befinden sich außerhalb des Luftstroms, der die Schmutzluft ansaugt. Darüber hinaus ist ein separater Lüfter vorgesehen, der die gereinigte Luft zur Kühlung auf die Akkus leitet.

Schliesslich ist in der US 2003/0134189 ein Staubsauger mit einem Gehäuse, einer Luftansaugvorrichtung, einem Staubbehälter, einer Luftansaugöffnung, einem Akku-Pack sowie einer Luftausstoßöffnung offenbart. Die Luftansaugöffnung sowie der Staubbehälter befinden sich stromaufwärts zur Luftansaugvorrichtung. Der Akku-Pack und die Luftausstoßöffnung sind stromabwärts zur Luftansaugvorrichtung positioniert. Mit der Luftansaugvorrichtung wird Schmutzluft durch die Luftansaugöffnung und in den Staubbehälter gesogen. Im Staubbehälter bleibt der Schmutz zurück und gereinigte Luft tritt aus dem Stabbehälter wieder aus. Nachdem die gereinigte Luft die Luftansaugvorrichtung passiert hat, wird diese jenseits der Luftansaugvorrichtung auf den Akku-Pack geblasen, um diesen zu kühlen. Anschliessend wird die gereinigte Luft wieder aus dem Gehäuse durch die Luftausstoßöffnung herausgeblasen.

Nachteilig an den bekannten Systemen ist, dass für den Betrieb eines akkubetriebenen Geräts eine gesonderte Ladestation mit integrierter Kühlung für das Laden des Akkumulators nötig ist. Diese verteuert einerseits die Herstellung von akkubetriebenen Geräten, da in der Regel zu jedem Gerät auch ein Ladegerät mit verkauft wird. Ausserdem kann ein Ladegerät im mobilen Einsatz leicht vergessen werden. Dies führt dazu, dass das akkubetriebene Gerät wegen des fehlenden Ladegeräts nur für eine Akkuladung lang betrieben werden kann.

Nachteilig ist an den bekannten Systemen auch, dass die Kühlleistung im Betrieb des Akkumulators nach dem Stand der Technik stark limitiert ist. Das in der EP 1 178 557 81 angegebene Handgerät lässt nämlich aufgrund der Bauart nur relativ kleine Kühlgebläse zu.

Die Aufgabe der Erfindung ist es daher, eine verbesserte Temperierung, insbesondere Kühl- und Erwärmungsmöglichkeit, für Akkumulatoren anzugeben.

Erfindungsgemäss wird diese Aufgabe mit einem Staubsauger der eingangs genannten Art gelöst bei dem der Staubsauger einen Unterdruckerzeuger umfasst, welcher zur Erzeugung eines Luftstroms entlang eines Strömungsverlaufes vorbereitet ist und der zumindest eine Akkumulator oder der zumindest eine Akkuschacht in dem genannten Strömungsverlauf angeordnet ist, und eine Umschalteinrichtung umfasst, welche dazu eingerichtet ist, den zumindest einen Akkumulator oder den zumindest einen Akkuschacht in einer ersten Schaltstellung saugseitig und in einer zweiten Schaltstellung druckseitig mit dem Unterdruckerzeuger zu verbinden.

Erfindungsgemäss wird damit erreicht, dass ein relativ starker Unterdruckerzeuger zur Temperierung der Akkumulatoren eingesetzt werden kann. Zumeist besteht ein Staubsauger aus einem fahrbaren Grundteil und einer mit diesem über einen Saugschlauch verbundenen Saugdüse. Da der Grundteil in der Regel nicht von einem Untergrund angehoben werden muss, sondern beim Staubsaugen hinterher gezogen wird, fällt die Masse und auch die Grösse eines leistungsstarken Unterdruckerzeugers nicht so sehr ins Gewicht wie bei einem reinen Handgerät. Die Erfindung kann somit auch darin gesehen werden, zur Einsicht zu gelangen, dass sich ein Staubsauger besonders gut für eine effektive Temperierung von Akkumulatoren eignet.

An dieser Stelle wird angemerkt, dass als Akkuschacht im Rahmen der Erfindung jede Art von Vorrichtung zu verstehen ist, in der ein Akkumulator eingelegt bzw. eingesteckt werden kann. Dies kann auch zum Zwecke des Energietransfers sein, sodass unter den Begriff beispielsweise auch Ladeschalen oder Ladeschächte fallen.

Weiterhin wird angemerkt, dass unter einem Unterdruckerzeuger jede Art einer Strömungs-Arbeitsmaschine für gasförmige Medien zu verstehen ist. Unter den Begriff fallen insbesondere Gebläse, Lüfter, Ventilatoren und dergleichen.

Vorteilhafte Ausgestaltungen und Weiterbildungen der Erfindung ergeben sich aus den Unteransprüchen sowie aus der Beschreibung in Zusammenschau mit den Figuren.

Günstig ist es, wenn der zumindest eine Akkumulator oder der zumindest eine Akkuschacht im Strömungsverlauf vor dem Unterdruckerzeuger angeordnet ist. Auf diese Weise kann der Akkumulator effektiv gekühlt werden, da die zum Akkumulator geleitete Luft nicht von der Abwärme des Unterdruckerzeugers erwärmt wird.

Günstig ist es auch, wenn der zumindest eine Akkumulator oder der zumindest eine Akkuschacht im Strömungsverlauf hinter dem Unterdruckerzeuger angeordnet ist. Auf diese Weise kann die Abwärme des Unterdruckerzeugers genutzt werden, um den Akkumulator zu erwärmen, beispielsweise wenn der Staubsauger bei tiefen Temperaturen betrieben wird.

Besonders vorteilhaft ist es, wenn im Strömungsverlauf eine Saugöffnung angeordnet ist, welche für das Saugen von Schmutz eingerichtet ist. Bei dieser Variante wird der Unterdruckerzeuger sowohl zur Temperierung des Akkumulators als auch zum Saugen von Schmutz verwendet. Der Unterdruckerzeuger erfüllt somit einen Doppelnutzen, weswegen der erfindungsgemässe Staubsauger besonders kostengünstig hergestellt werden kann. Vorteilhaft wird der Unterdruckerzeuger von dem Sauggebläse des Staubsaugers gebildet, weiches In der Regel sehr leistungsstark ist, weswegen die Temperierung des Akkumulators besonders effektiv erfolgen kann.

Besonders vorteilhaft ist es, wenn der Strömungsverlauf mehrere Zweige umfasst und der zumindest eine Akkumulator und/oder der zumindest eine Akkuschacht im Strömungsverlauf wenigstens eines Zweiges angeordnet ist. Auf diese Weise kann der Luftdurchsatz durch den Akkuschacht unabhängig vom Luftdurchsatz durch die Saug- oder Abluftöffnung gesteuert werden, beispielsweise durch eine Steuerklappe. Weiterhin kann der durch den Akkuschacht verlaufende Zweig des Strömungsverlaufs vom schmutzführenden Zweig getrennt werden.

In diesem Zusammenhang ist es insbesondere von Vorteil, wenn der Strömungsverlauf saugseitig wenigstens zwei Zweige umfasst und ein Zweig mit der Saugöffnung und ein anderer mit dem zumindest einen Akkumulator oder dem zumindest einen Akkuschacht verbunden ist. Auf diese Weise kann durch einen Zweig Schmutz, insbesondere Schmutzwasser, und durch den anderen Zweig saubere Luft zur Temperierung des Akkumulators gesaugt werden.

In einer besonders vorteilhaften Variante umfasst der Staubsauger ein Ladegerät, welches mit dem zumindest einen Akkumulator oder Kontakten des zumindest einen Akkuschachts elektrisch verbunden ist. Auf diese Weise kann der Akkumulator auch gleich im Staubsauger geladen werden und wird dort optimal temperiert, beim Laden in der Regel gekühlt.

Besonders vorteilhaft ist es, wenn das Ladegerät im Strömungsverlauf angeordnet ist. Somit wird nicht nur der Akkumulator, sondern auch das Ladegerät gekühlt, welches häufig vergleichsweise hohe Ströme führt.

Die obigen Ausgestaltungen und Weiterbildungen der Erfindung lassen sich auf beliebige Art und Weise kombinieren.

Die vorliegende Erfindung wird nachfolgend anhand der in den schematischen Figuren der Zeichnung angegebenen Ausführungsbeispiele näher erläutert.

Es zeigen dabei
- Fig. 1: ein erstes Beispiel für einen erfindungsgemässen Staubsauger;
- Fig. 2: einen schematischen Querschnitt durch eine alternative Ausführungsform eines Staubsaugers, bei dem ein gemeinsamer Unterdruckerzeuger für das Absaugen von Staub und für die Temperierung des Akkumulators vorgesehen ist; und
- Fig. 3: eine Anordnung, bei welcher der Akkumulator saug- oder druckseitig mit dem Unterdruckerzeuger verbunden werden kann.

In den Figuren der Zeichnung sind gleiche und ähnliche Teile mit gleichen Bezugszeichen und funktionsähnliche Elemente und Merkmale - sofern nichts Anderes ausgeführt ist - mit gleichen Bezugszeichen aber unterschiedlichen Indizes versehen.

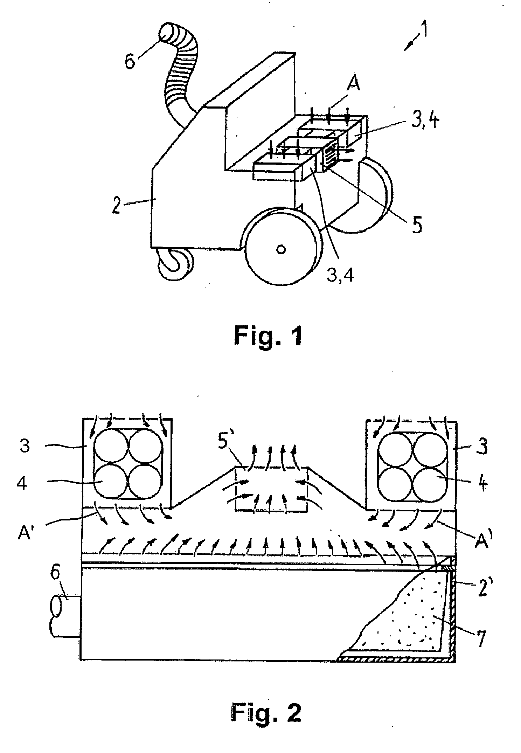

Fig. 1 zeigt einen Staubsauger 1 mit einem Gehäuse 2 und zwei darin angeordneten Akkuschächten 3, welche für die Aufnahme von Akkumulatoren 4 vorbereitet sind. Der Staubsauger 1 umfasst zudem einen Unterdruckerzeuger 5, welcher zur Erzeugung eines Luftstroms entlang eines Strömungsverlaufes A vorbereitet ist, wobei die Akkuschächte 3 in dem genannten Strömungsverlauf A angeordnet sind. In der Fig. 1 ist das Gehäuse 2 mit abgehobenem Deckel dargestellt, sodass die Sicht auf die Akkuschächte 3 gegeben ist. Wie aus der Fig. 1 ersichtlich ist, saugt der Unterdruckerzeuger 5 Luft über die Oberseite der Akkuschächte 3 an und bläst sie rückseitig am Staubsauger 1 wieder aus. Auf diese Weise können die in den Akkuschächten 3 eingesteckten Akkumulatoren 4 beim Laden oder Entladen gekühlt, beziehungsweise wenn diese wärmer als die Umgebungsluft sind, auch erwärmt werden, sodass sie ihre Leistung optimal entfalten können. Der Unterdruckerzeuger 5 ist in diesem Ausführungsbeispiel als ein separat steuerbares Lüfterelement ausgebildet und zwischen den beiden Akkuschächten 3 angeordnet.

Zusätzlich umfasst der Staubsauger 1 einen Saugschlauch 6, über den in an sich bekannter Weise mit Hilfe eines weiteren Unterdruckerzeugers, z.B. einem Sauggebläse (nicht dargestellt) Staub beziehungsweise Schmutz angesaugt werden kann.

Im gezeigten Beispiel sind die Akkuschächte 3 im Strömungsverlauf A vor dem Unterdruckerzeuger 5 angeordnet. Dies ist vor allem dann von Vorteil, wenn die Akkumulatoren 4 gekühlt werden sollen. Denkbar wäre aber auch, dass die Akkuschächte 3 im Strömungsverlauf A hinter dem Unterdruckerzeuger 5 angeordnet sind. Dies ist vor allem dann von Vorteil, wenn die Akkumulatoren 4 erwärmt werden sollen, beispielsweise wenn der Staubsauger 1 bei tiefen Temperaturen im Aussenbetrieb verwendet wird. Die angesaugte Luft wird nämlich durch den Unterdruckerzeuger 5 erwärmt und kann die Akkumulatoren 4 so besser auf eine optimale Betriebstemperatur erwärmen.

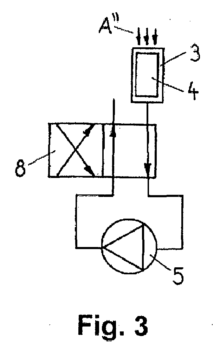

Optional kann der Staubsauger 1 auch mit einer Umschalteinrichtung ausgerüstet sein, welche dazu eingerichtet ist, die Akkumulatoren 4 beziehungsweise die Akkuschächte 3 in einer ersten Schaltstellung saugseitig und in einer zweiten Schaltstellung druckseitig mit dem Unterdruckerzeuger 5 zu verbinden. Auf diese Weise kann ein Akkumulator 4 optimal gekühlt oder erwärmt werden (siehe hierzu auch Fig. 3).

Fig. 2 zeigt nun ausschnittsweise eine schematische Darstellung einer alternativen Ausführungsform eines erfindungsgemässen Staubsaugers. Dabei saugt ein Unterdruckerzeuger 5' Luft über die Akkuschächte 3 an, um die Akkumulatoren 4, die in der gezeigten Ausführung aus jeweils vier Zellen bestehen, zu kühlen. Gleichzeitig saugt der Unterdruckerzeuger 5' aber auch Luft über den Saugschlauch 6 und den Filter 7 an.

Der Strömungsverlauf A' umfasst saugseitig somit wenigstens zwei Zweige, wobei ein Zweig mit der Saugöffnung (hier mit dem Saugschlauch 6), welche für das Saugen von Schmutz eingerichtet ist, und ein anderer mit den Akkumulatoren 4 beziehungsweise den Akkuschächten 3 verbunden ist. Bei dieser Variante erfüllt der Unterdruckerzeuger 5' somit einen Doppelnutzen, weil er sowohl das Saugen als auch die Temperierung der Akkumulatoren 4 ermöglicht. Zudem sind die Saug-Gebläse eines Staubsaugers 1 in der Regel sehr leistungsstark (rund 1―2 kW), sodass eine Temperierung der Akkumulatoren 4 sehr effizient erfolgen kann. Um den Luftdurchsatz durch die verschiedenen Zweige steuern zu können, ist es auch möglich, Klappen oder Schieber (nicht dargestellt) vorzusehen, welche den Luftdurchsatz durch einzelne Zweige drosseln.

Alternativ wäre denkbar, dass der Zweig für die Kühlung der Akkumulatoren 4 wie der Saugschlauch 6 vor dem Filter 7 in den Strömungsverlauf A' einmündet. Dies ist unter Umständen konstruktiv einfacher, als die Einmündung nach dem Filter 7 anzuordnen.

Fig. 3 zeigt nun einen Staubsauger 1 mit einer Umschalteinrichtung 8, welche dazu eingerichtet ist, den zumindest einen Akkumulator 4 oder den zumindest einen Akkuschacht 3 in einer ersten Schaltstellung saugseitig und in einer zweiten Schaltstellung druckseitig mit dem Unterdruckerzeuger 5 zu verbinden. In der Fig. 3 ist jene Schaltstellung dargestellt, in welcher der Akkumulator 4 beziehungsweise der Akkuschacht 3 saugseitig mit dem Unterdruckerzeuger 5 verbunden ist. Der Akkumulator 4 kann so optimal gekühlt werden. Wird die Umschalteinrichtung 8 betätigt, kann der Akkumulator 4 druckseitig mit dem Unterdruckerzeuger 5 verbunden werden, sodass der Akkumulator 4 mit der Abwärme des Unterdruckerzeugers 5 erwärmt werden kann. Die Umschalteinrichtung 8 kann beispielsweise als Klappe, Schieber, Ventil oder dergleichen ausgebildet sein.

Die Akkumulatoren 4 können fix im Staubsauger 1 verbaut sein oder auch entnehmbar in den Akkuschächten 3 angeordnet sein. In letzterem Fall können die Akkumulatoren 4 auch in anderen Geräten verwendet werden. Der Staubsauger 1 umfasst in einer vorteilhaften Ausgestaltung daher auch ein Ladegerät, welches mit dem zumindest einen Akkumulator 4 oder Kontakten in dem zumindest einen Akkuschacht 3 elektrisch verbunden ist. Vorzugsweise ist das Ladegerät im Strömungsverlauf A, A', A" angeordnet, insbesondere vorteilhaft benachbart zum Akkumulator 4 oder zum Akkuschacht 3.

Im Staubsauger 1 können im gezeigten Beispiel zwei Akkumulatoren 4 eingeschoben werden, die dort geladen bzw. zum Betrieb des Staubsaugers 1 verwendet werden können. Selbstverständlich kann ein erfindungsgemässer Staubsauger 1 auch mehr als zwei Akkuschächte 3 umfassen oder auch nur einen Akkuschacht 3.

Abschliessend wird darauf hingewiesen, dass die Figuren teilweise unmassstäblich und auch stark vereinfacht gezeichnet sind. Ein real ausgeführter Staubsauger 1 kann daher mehr Bestandteile als dargestellt enthalten und somit deutlich komplexer aufgebaut sein, als dies in den Figuren dargestellt ist. Teile der in den Figuren dargestellten Anordnungen können darüber hinaus auch die Basis für unabhängige Erfindungen bilden.

Schliesslich wird auch angemerkt, dass sich die Erfindung nicht nur auf Haushaltsstaubsauger, sondern allgemein auf Geräte zum Ansaugen von Schmutz, also z.B. auch auf Industriesauger (insbesondere auch zum Absaugen von Flüssigkeiten), Laubsauger und dergleichen bezieht.

Zur Verdeutlichung der Erfindung sind in den gezeigten Ausführungsbeispielen jeweils nur zwei Akkumulatoren beziehungsweise zwei Akkuschächte dargestellt. Es ist für einen Fachmann aus den vorliegenden Unterlagen jedoch offensichtlich, dass ein erfindungsgemässer Staubsauger auch zur Anordnung nur eines Akkumulators oder zur Anordnung von mehr als zwei Akkumulatoren ausgebildet sein kann.

Die folgende Bezugszeichenliste und die technischen Lehren der Patentansprüche gelten als im Rahmen der Offenbarung liegend und offenbaren für den Fachmann alleine oder in Zusammenschau mit den Figuren weitere Details der Erfindung und ihrer Ausführungsbeispiele.

## Patentansprüche

1. Staubsauger (1) mit einem Gehäuse (2, 2') und zumindest einem darin angeordneten Akkumulator (4) und/oder zumindest einem Akkuschacht (3), welcher für die Aufnahme zumindest eines Akkumulators (4) vorbereitet ist, wobei der Staubsauger (1) einen Unterdruckerzeuger (5, 5') umfasst, welcher zur Erzeugung eines Luftstroms entlang eines Strömungsverlaufes (A, A', A") vorbereitet ist, und dass der zumindest eine Akkumulator (4) oder der zumindest eine Akkuschacht (3) in dem genannten Strömungsverlauf (A, A', A") angeordnet ist,
**dadurch gekennzeichnet, dass** eine Umschalteinrichtung (8), welche dazu eingerichtet ist, den zumindest einen Akkumulator (4) oder den zumindest einen Akkuschacht (3) in einer ersten Schaltstellung saugseitig und in einer zweiten Schaltstellung druckseitig mit dem Unterdruckerzeuger (5, 5') zu verbinden.

2. Staubsauger nach Anspruch 1,
**dadurch gekennzeichnet, dass** der zumindest eine Akkumulator (4) oder der zumindest eine Akkuschacht (3) im Strömungsverlauf (A, A', A") vor dem Unterdruckerzeuger (5, 5') angeordnet ist.

3. Staubsauger nach Anspruch 1,
**dadurch gekennzeichnet, dass** der zumindest eine Akkumulator (4) oder der zumindest eine Akkuschacht (3) im Strömungsverlauf (A") hinter dem Unterdruckerzeuger (5, 5') angeordnet ist.

4. Staubsauger nach einem der Ansprüche 1 bis 3,
**dadurch gekennzeichnet, dass** das im Strömungsverlauf (A') eine Saugöffnung (6) angeordnet ist, welche für das Saugen von Schmutz eingerichtet ist.

5. Staubsauger nach einem der Ansprüche 1 bis 4,
**dadurch gekennzeichnet, dass** der Strömungsverlauf (A') mehrere Zweige umfasst und der zumindest eine Akkumulator (4) oder der zumindest eine Akkuschacht (3) im Strömungsverlauf (A') wenigstens eines Zweiges angeordnet ist.

6. Staubsauger nach Anspruch 5,
**dadurch gekennzeichnet, dass** der Strömungsverlauf (A') saugseitig wenigstens zwei Zweige umfasst und ein Zweig mit der Saugöffnung (6) und ein anderer mit dem zumindest einen Akkumulator (4) oder dem zumindest einen Akkuschacht (3) verbunden ist.

7. Staubsauger nach einem der Ansprüche 1 bis 6,
**gekennzeichnet durch** ein Ladegerät, welches mit dem zumindest einen Akkumulator (4) oder Kontakten in dem zumindest einen Akkuschacht (3) elektrisch verbunden ist.

8. Staubsauger nach Anspruch 7,
**dadurch gekennzeichnet, dass** das Ladegerät im Strömungsverlauf (A, A', A") angeordnet ist.

## Claims

1. Vacuum cleaner (1) comprising a housing (2, 2') and at least one battery (4) arranged therein and/or at least one battery compartment (3) designed to hold at least one battery (4), the vacuum cleaner (1) including a vacuum generator (5, 5') designed to generate an air stream along a flow path (A, A', A") and the at least one battery (4) or the at least one battery compartment (3) being arranged in the said flow path (A, A', A"), **characterised in that** a switch-over device (8) is designed to connect the at least one battery (4) or the at least one battery compartment (3) to the vacuum generator (5, 5') on the suction side in a first switching position and on the pressure side in a second switching position.

2. Vacuum cleaner according to claim 1, **characterised in that** the at least one battery (4) or the at least one battery compartment (3) is arranged in the flow path (A, A', A") upstream of the vacuum generator (5, 5').

3. Vacuum cleaner according to claim 1, **characterised in that** the at least one battery (4) or the at least one battery compartment (3) is arranged in the flow path (A") downstream of the vacuum generator (5, 5').

4. Vacuum cleaner according to one of claims 1 to 3, **characterised in that** a suction port (6) designed to suck up dirt is arranged in the flow path (A').

5. Vacuum cleaner according to one of claims 1 to 4, **characterised in that** the flow path (A') includes several branches and the at least one battery (4) or the at least one battery compartment (3) is arranged in the flow path (A') of at least one branch.

6. Vacuum cleaner according to claim 5, **characterised in that** the flow path (A') includes at least two branches on the suction side, with one branch connected to the suction port (6) and another connected to the at least one battery (4) or to the at least one battery compartment (3).

7. Vacuum cleaner according to one of claims 1 to 6, **characterised by** a charger electrically connected to the at least one battery (4) or to contacts in the at least one battery compartment (3).

8. Vacuum cleaner according to claim 7, **characterised in that** the charger is arranged in the flow path (A, A', A").

## Revendications

1. Aspirateur (1) comprenant un carter (2, 2'), et au moins une batterie (4), qui y est agencée, et/ou au moins un compartiment de batterie (3), qui est prêt à accueillir une batterie (4), l'aspirateur (1) comprenant un générateur de dépression (5, 5'), qui est destiné à générer un flux d'air le long de la trajectoire d'un flux (A, A', A") et qu'au moins une batterie (4), ou au moins un compartiment de batterie (3), est disposé sur la trajectoire du flux (A, A', A") cité,
**caractérisé en ce qu'**un dispositif de commutation (8), qui est conçu pour relier au moins une batterie (4), ou au moins un compartiment de batterie (3), avec le générateur de dépression (5, 5') dans une première position de commutation du côté aspiration, dans une deuxième position de commutation du côté pression.

2. Aspirateur selon la revendication 1,
**caractérisé en ce qu'**au moins une batterie (4), ou au moins un compartiment de batterie (3), est disposé sur la trajectoire du flux (A, A', A") avant le générateur de dépression (5, 5').

3. Aspirateur selon la revendication 1,
**caractérisé en ce qu'**au moins une batterie (4), ou au moins un compartiment de batterie (3), est disposé sur la trajectoire du flux (A, A', A") après le générateur de dépression (5, 5').

4. Aspirateur selon l'une des revendications 1 à 3,
**caractérisé en ce qu'**un orifice d'aspiration (6), qui est conçu pour l'aspiration de la saleté, est disposé sur la trajectoire du flux (A').

5. Aspirateur selon l'une des revendications 1 à 4,
**caractérisé en ce que** la trajectoire du flux (A') comprend plusieurs ramifications et au moins une batterie (4), ou au moins un compartiment de batterie (3), est disposé sur la trajectoire du flux (A') pour au moins une ramification.

6. Aspirateur selon la revendication 5,
**caractérisé en ce que** la trajectoire du flux (A') comprend au moins deux ramifications du côté de l'aspiration et une ramification comportant l'orifice d'aspiration (6) et une autre ramification étant reliée avec au moins une batterie (4), ou au moins un compartiment de batterie (3).

7. Aspirateur selon l'une des revendications 1 à 6,
**caractérisé par** un chargeur qui est relié électriquement avec au moins une batterie (4), ou avec des contacteurs dans au moins un compartiment de batterie (3).

8. Aspirateur selon la revendication 7,
**caractérisé en ce que** le chargeur est disposé sur la trajectoire du flux (A, A', A").
